# FASCICULE DE BREVET EUROPEEN

(11) **EP 3 142 353 B1**
(45) Date de publication et mention de la délivrance du brevet: **18.12.2019**
(21) Numéro de dépôt: 16188012.5
(22) Date de dépôt: 09.09.2016
(51) Int. Cl.: H04N 5/232, H04N 5/235

(54) **DRONE AVEC CAMÉRA À VISÉE FRONTALE DONT LES PARAMÈTRES DE CONTRÔLE,NOTAMMENT L'AUTOEXPOSITION, SONT RENDUS INDÉPENDANTS DE L'ATTITUDE**
DROHNE MIT FRONTAL AUSGERICHTETER KAMERA, DEREN KONTROLLPARAMETER, INSBESONDERE DIE AUTOMATISCHE BELICHTUNG, UNABHÄNGIG VON DER HALTUNG KONZIPIERT SIND
DRONE WITH FORWARD-LOOKING CAMERA IN WHICH THE CONTROL PARAMETERS, ESPECIALLY AUTOEXPOSURE, ARE MADE INDEPENDENT OF THE ATTITUDE

(30) Priorité: 10.09.2015 FR 1558420
(43) Date de publication de la demande: 15.03.2017
(73) Titulaire: Parrot Drones, 75010 Paris (FR)
(72) Inventeur: BALLEY, Axel, 75019 Paris (FR); POCHON, Benoît, 94300 Vincennes (FR)
(74) Mandataire: Dupuis-Latour, Dominique

(56) Documents cités:
- FR-A1- 3 000 813
- JP-A- 2003 267 295
- US-A1- 2008 118 180
- US-A1- 2011 001 831
- US-A1- 2012 307 042
- US-A1- 2013 021 520
- US-A1- 2014 176 722
- US-A1- 2015 222 816
- RYO MIYAUCHI ET AL: "Development of omni-directional image stabilization system using camera posture information", ROBOTICS AND BIOMIMETICS, 2007. ROBIO 2007. IEEE INTERNATIONAL CONFERENCE ON, IEEE, PISCATAWAY, NJ, USA, 15 décembre 2007 (2007-12-15), pages 920-925, XP031252928, ISBN: 978-1-4244-1761-2
- Anonymous: "The New Parrot Bebop Drone: Built for Stabilized Aerial Video | explora", , 6 octobre 2014 (2014-10-06), XP055233862, Extrait de l'Internet: URL:https://web.archive.org/web/2014100621 4813/http://www.bhphotovideo.com/explora/v ideo/news/new-parrot-bebop-drone-built-sta bilized-aerial-video [extrait le 2015-12-04]

## Description

L'invention concerne le traitement des images numériques captées par une caméra embarquée dans un appareil mobile piloté à distance, ci-après "drone", en particulier dans un engin volant motorisé tel qu'un drone volant ou UAV (*Unmanned Aerial Vehicle*).

L'invention n'est toutefois pas limitée aux images recueillies par des appareils volants ; elle s'applique aussi bien à des appareils roulants évoluant sur le sol sous le contrôle d'un opérateur distant, ou encore des appareils flottants évoluant sur un plan d'eau, le terme de "drone" devant être entendu dans son acception la plus générale.

L'invention s'applique avantageusement aux images recueillies par la caméra frontale d'un drone à voilure tournante tel qu'un quadricoptère.

*L'AR.Drone 2.0* ou le *Bebop Drone* de Parrot SA, Paris, France sont des exemples typiques de tels quadricoptères. Ils sont équipés d'une série de capteurs (accéléromètres, gyromètres 3 axes, altimètre), d'une caméra frontale captant une image de la scène vers laquelle est dirigé le drone et d'une caméra de visée verticale captant une image du terrain survolé. Ils sont pourvus de rotors multiples entrainés par des moteurs respectifs commandables de manière différenciée afin de piloter le drone en attitude et en vitesse. Divers aspects de ces drones sont décrits notamment dans les WO 2010/061099 A2, EP 2 364 757 A1, EP 2 613 213 A1 ou encore EP 2 613 214 A1 et FR 3 000 813 A1 (Parrot SA).

Un article publié sur Internet de Timothy McDougal intitulé "The New Parrot Bebop Drone: Built for Stabilized Aerial Video" daté du 06.10.2014 décrit en particulier l'appareil *Bebop Drone* précité, qui est un drone muni d'un objectif *fisheye* associé à un système de stabilisation et de contrôle de l'image.

La caméra video frontale est utilisable pour un pilotage "en mode immersif", c'est-à-dire où l'utilisateur se sert de l'image de la caméra de la même façon que s'il se trouvait lui-même à bord du drone. Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

Ces images étant destinées à être enregistrées et communiquées, il est souhaitable qu'elles présentent le moins de défauts possible, notamment de défauts provoqués par le comportement du drone : en effet, tout déplacement linéaire du drone vers l'avant, vers l'arrière ou sur le côté implique un basculement du drone, et donc un effet correspondant, indésirable, de décalage, de rotation, d'oscillation,... de la caméra qui, en pratique, induit divers artefacts intempestifs sur l'image finale présentée à l'utilisateur.

Ces défauts peuvent être tolérables dans une configuration de "pilotage immersif". En revanche, s'il s'agit d'utiliser le drone à la manière d'une caméra video mobile pour capter des séquences qui seront enregistrées et restituées ultérieurement, ces défauts sont extrêmement gênants, de sorte qu'il est souhaitable de les réduire à un minimum.

Dans le cas du *Bebop Drone* précité, celui-ci met en oeuvre une caméra munie d'un objectif à champ hémisphérique de type *fisheye* couvrant un champ d'environ 180°, mais dont seule une partie du champ capté est utilisée, cette partie correspondant à peu près au secteur angulaire capté par une caméra conventionnelle.

Pour ce faire, une fenêtre particulière (ci-après "zone de capture") est sélectionnée dans l'image hémisphérique d'ensemble formée à la surface du capteur. Cette fenêtre est mobile en rotation et en translation, et déplacée en permanence en fonction des mouvements du drone déterminés par la centrale inertielle, et en sens contraire de ces mouvements. L'image recueillie par l'objectif *fisheye* subit certes les mêmes mouvements d'oscillation et de rotation qu'une caméra conventionnelle, mais le déplacement de la zone image est asservi de manière à compenser ces mouvements et produire ainsi une image stabilisée à l'égard des mouvements du drone.

L'image de la zone de capture, plus exactement une partie utile (ci-après "zone utile brute") de celle-ci fait ensuite l'objet d'un traitement de reprojection pour compenser les distorsions géométriques introduites par l'objectif *fisheye* : redressement des lignes droites courbées par l'objectif, rétablissement d'un grossissement uniforme entre le centre et la périphérie de l'image, etc. L'image finale obtenue ("zone utile redressée") est ensuite transmise à l'utilisateur pour visualisation sur écran, enregistrement, etc. On définit ainsi une "caméra virtuelle" en extrayant de la scène totale capturée une zone particulière (la zone de capture) qui est dynamiquement déplacée, en rotation et en translation, dans l'image initiale en sens inverse des mouvements du drone afin d'annihiler les oscillations qui sinon seraient observées sur l'image finale présentée à l'utilisateur, puis en appliquant un traitement de redressement d'image pour délivrer une représentation de la scène dépourvue de distorsions géométriques et autres. Cette technique est décrite dans la demande EP 2 933 775 A1 (Parrot), publiée le 21.10.2015.

Une technique comparable est également décrite dans l'article de R. Miyauchi et al., "Development of Omni-Directional Image Stabilization System Using Camera Posture Information", Proceedings of the 2007 IEEE International Conference on Robotics and Biomimetics, Dec. 15-18, 2007, pp.920-925, qui propose d'appliquer une technique EIS (*Electronic Image Stabilization*) à l'image captée par une caméra munie d'un objectif à champ hémisphérique de type "*fisheye*", c'est-à-dire couvrant un champ d'environ 180°. L'image brute est acquise en totalité, soumise à un traitement de redressement (pour compenser les distorsions du *fisheye*) et ensuite de fenêtrage dynamique en fonction des mouvements du robot portant la caméra. La compensation est opérée par translation d'une zone de capture, sur une zone d'acquisition en sens contraire du mouvement à compenser, le capteur ne transmettant qu'une sous-partie correspondant à l'image stabilisée.

La présente invention vise l'élimination d'un défaut particulier qui apparait lors de certaines évolutions du drone.

Ce défaut concerne le contrôle dynamique d'un certain nombre de paramètres de fonctionnement de la caméra, à savoir des paramètres qui sont ajustés automatiquement par des algorithmes d'analyse de l'image tels que les algorithmes d'autoexposition (AE, basée sur une analyse de la luminosité des différents points de l'image), de balance automatique des blancs (AWB, basée sur une analyse colorimétrique des différents points de l'image) ou encore de mise au point automatique (AF, basée sur une analyse du contraste des différents points de l'image).

Des exemples d'algorithmes AE et AWB peuvent être trouvés dans le US 2015/0222816 A1, et d'algorithme AF dans le US 2013/0021520 A1.

Le US 2011/001831 A1 décrit un algorithme AF/AE asservi à une modification du cadrage de l'image, résultant par exemple d'un mouvement panoramique destiné à suivre une cible dans une zone de "tracking". De fait, l'algorithme stabilise l'exposition et la mise au point en fonction du déplacement de la cible, et non en fonction de déplacements du drone supportant la caméra.

Le US 2008/118180 A1 décrit un algorithme AE/AWB adapté à une caméra panoramique, notamment une caméra *fisheye.* Mais il n'envisage pas que cette caméra puisse être embarquée dans un véhicule mobile dont le comportement serait susceptible d'introduire des artefacts dans le fonctionnement du mécanisme AE/AWB.

Dans la suite de la description, on prendra comme cas particulier typique le contrôle automatique de l'exposition, mais l'invention n'est pas limitée au contrôle de ce paramètre et, comme on le comprendra, peut être appliquée au contrôle automatique d'autres paramètres basés sur une analyse de l'image, tels que la balance des blancs et la mise au point.

Le principe d'un algorithme d'autoexposition (AE) est de choisir pour le capteur un couple {temps d'exposition, gain} permettant de capturer n'importe quelle scène avec une même luminosité cible. Ce choix est opéré à partir d'une analyse d'une version de l'image de définition réduite (par exemple 64 x 48 pixels), ci-après "imagette", obtenue par sous-échantillonnage ou décimation, et dont est extrait un histogramme de luminosité ainsi qu'éventuellement d'autres paramètres, ces différentes données de départ étant désignées ci-après par le terme général de "statistiques" de l'image.

Dans le cas décrit plus haut d'une zone de capture extraite de l'image globale recueillie par le capteur, c'est le contenu de la zone de capture qui produit les statistiques servant à calculer les paramètres de contrôle de l'autoexposition.

Mais, comme on l'a expliqué plus haut, cette zone de capture est plus grande que la zone utile finale qui sera présentée à l'utilisateur, de sorte que l'algorithme d'autoexposition peut prendre des décisions basées sur des éléments de la scène que l'utilisateur ne voit pas, c'est-à-dire des éléments situés à l'intérieur de la zone de capture mais à l'extérieur de la zone utile.

Or, la scène que l'on cherche à bien exposer est celle qui est vue par l'utilisateur (la zone utile), et non la zone de capture, qui diffère de cette dernière.

Dans l'exemple d'une image comprenant une partie de ciel et une partie de sol, la proportion entre ciel et sol variera selon l'inclinaison de la caméra, et donc selon l'attitude du drone. De fait, si le drone passe d'une attitude de vol stationnaire à une attitude inclinée, plongeante (basculement lié à un déplacement linéaire vers l'avant), alors la caméra, baissée vers le sol (car elle est liée au corps du drone) va capter une proportion bien plus importante de sol. Comme le sol est plus sombre, l'asservissement de l'algorithme d'autoexposition tendra à compenser cette variation de luminosité par une augmentation du temps d'exposition et/ou du gain. Cependant, du fait du déplacement de la zone de capture dans l'image initiale et de la reprojection opérée pour en extraire la zone utile, l'utilisateur verra toujours la même scène. Mais cette scène sera temporairement surexposée du fait de l'action correctrice de l'autoexposition, surexposition qui disparaitra quand le drone retournera à son attitude initiale - et sans pour autant que les contours de l'image vue par l'utilisateur n'aient changé.

Tel est que problème que vise à résoudre l'invention.

Pour ce faire, l'invention propose un drone comprenant, de manière en elle-même connue, notamment d'après l'article précité de Miyauchi et al., les éléments énoncés par le préambule de la revendication 1. De façon caractéristique de l'invention, la caméra comprend en outre les moyens énoncés dans la partie caractérisante de la revendication 1.

Les sous-revendications visent diverses mises en oeuvre particulières, avantageuses, de l'invention.

On va maintenant décrire un exemple de mise en oeuvre de la présente invention, en référence aux dessins annexés où les mêmes références désignent d'une figure à l'autre des éléments identiques ou fonctionnellement semblables.
La Figure 1 est une vue d'ensemble montrant le drone et l'appareil de télécommande associé permettant son pilotage à distance.
Les Figures 2a et 2b illustrent les modifications des directions de visée de la caméra entrainées par un basculement vers l'avant du drone, par exemple lors d'une phase d'accélération.
La Figure 3 illustre en (a1)-(a3) les étapes successives de fenêtrage et de correction des distorsions appliquées à l'image formée sur le capteur de la caméra du drone de manière à produire une image redressée, et en (b1)-(b3) les étapes correspondantes lorsque l'attitude du drone se modifie, avec la caméra baissée vers le sol.
La Figure 4 illustre en (a) et en (b) les histogrammes de luminosité respectivement obtenus par analyse des zones de capture (a2) et (b2) de la Figure 3.
La Figure 5 illustre sous forme de schéma par blocs fonctionnels les différents modules participant à la mise en oeuvre de l'invention.
La Figure 6 est un organigramme explicitant les principales étapes successives de mise en oeuvre de l'invention, dans un premier et un deuxième mode de réalisation de celle-ci.
La Figure 7 illustre les zones d'analyse de la zone de capture selon le premier mode de réalisation de l'invention, à partir de régions d'intérêt définies automatiquement à l'intérieur de cette zone de capture.
La Figure 8 illustre les zones d'analyse de la zone de capture selon le deuxième mode de réalisation de l'invention, à partir d'un quadrillage de la zone de capture.
La Figure 9 est un organigramme explicitant les principales étapes successives de mise en oeuvre de l'invention, dans un troisième mode de réalisation de celle-ci.

On va maintenant décrire des exemples de mise en oeuvre de la présente invention.

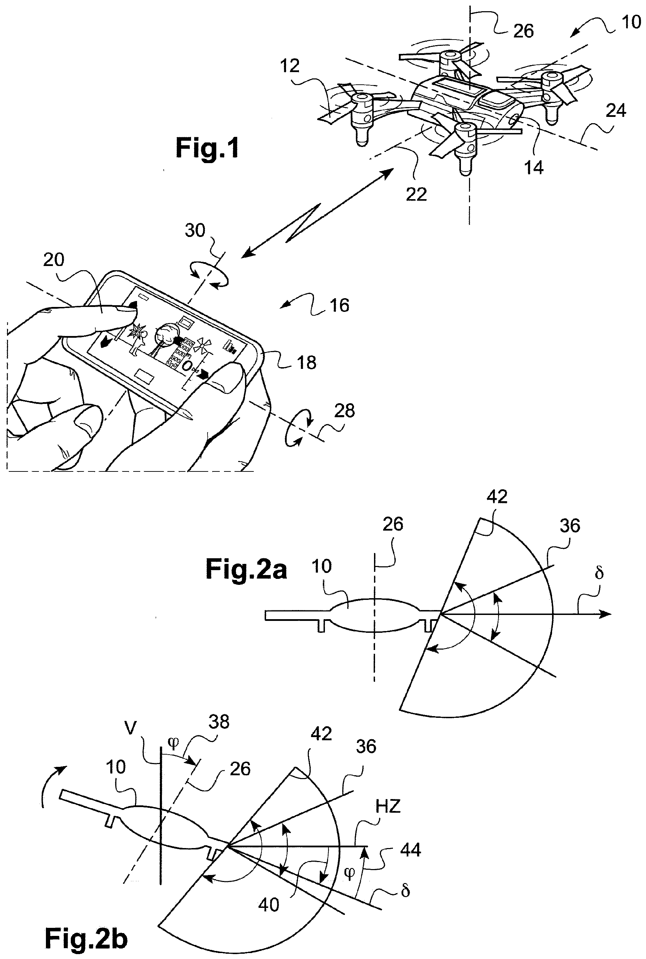

Sur la Figure 1, la référence 10 désigne de façon générale un drone, qui est par exemple un quadricoptère tel que le modèle *Bebop Drone* de Parrot SA, Paris, France. Ce drone comporte quatre rotors coplanaires 12 dont les moteurs sont pilotés indépendamment par un système intégré de navigation et de contrôle d'attitude. Il est pourvu d'une caméra 14 à visée frontale permettant d'obtenir une image de la scène vers laquelle est orienté le drone.

Le drone comporte également une caméra à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler (tangage *ϕ*, roulis *θ* et lacet *ψ*) décrivant l'inclinaison du drone par rapport à un plan horizontal d'un repère terrestre fixe. Un télémètre à ultrasons disposé sous le drone fournit par ailleurs une mesure de l'altitude par rapport au sol.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone, par exemple de type réseau local *Wi-Fi* (IEEE 802.11), pour l'échange bidirectionnel de données du drone 10 vers l'appareil 16, notamment pour la transmission de l'image captée par la caméra 14, et de l'appareil 16 vers le drone 10 pour l'envoi de commandes de pilotage.

L'appareil de télécommande 16 est également pourvu de capteurs d'inclinaison permettant de contrôler l'attitude du drone en imprimant à l'appareil des inclinaisons correspondantes selon des axes de roulis et de tangage, étant entendu que les deux composantes longitudinale et transversale de la vitesse horizontale du drone 10 seront intimement liées à l'inclinaison suivant les deux axes respectifs de tangage et de roulis. Le pilotage du drone consiste à faire évoluer celui-ci par :
a) rotation autour d'un axe de tangage 22, pour le faire avancer ou reculer ;
b) rotation autour d'un axe de roulis 24, pour le décaler vers la droite ou vers la gauche ;
c) rotation autour d'un axe de lacet 26, pour faire pivoter vers la droite ou vers la gauche l'axe principal du drone ; et
d) translation vers le bas ou vers le haut par changement du régime des gaz, de manière à respectivement réduire ou augmenter l'altitude du drone.

Lorsque ces commandes de pilotage sont appliquées par l'utilisateur à partir de l'appareil de télécommande 16, les commandes a) et b) de pivotement autour des axes de tangage 22 et de roulis 24 sont obtenues par des inclinaisons de l'appareil 16 respectivement autour de son axe longitudinal 28 et de son axe transversal 30 : par exemple, pour faire avancer le drone il suffit d'incliner l'appareil de télécommande 16 vers l'avant en le penchant autour de l'axe 28, pour le déporter à droite il suffit d'incliner l'appareil de télécommande 16 en le penchant autour de l'axe 30 vers la droite, etc. Les commandes c) et d), quant à elles, résultent d'actions appliquées par contact du doigt 20 de l'utilisateur sur des zones spécifiques correspondantes de l'écran tactile 18.

Le drone possède également un système automatique et autonome de stabilisation en vol stationnaire, activé notamment dès que l'utilisateur retire son doigt de l'écran tactile de l'appareil, ou automatiquement à la fin de la phase de décollage, ou encore en cas d'interruption de la liaison radio entre l'appareil et le drone.

La Figure 2a illustre schématiquement, de profil, l'attitude du drone lorsque celui-ci est immobile, dans un état de sustentation.

On a schématisé en 36 le champ couvert par une caméra frontale 14 de type conventionnel, par exemple une caméra couvrant un champ de 54° et dont l'axe de vision δ est centré sur l'horizon.

Si, comme illustré Figure 2b, le drone progresse vers l'avant avec une vitesse horizontale non nulle, par conception l'axe 26 du drone sera incliné vers l'avant d'un angle *ϕ* (angle de tangage) par rapport à la verticale V. Cette inclinaison vers l'avant, schématisée par la flèche 38, implique une inclinaison de même valeur, schématisée par la flèche 40, de l'axe δ de la caméra par rapport au plan de l'horizon HZ. On comprend ainsi qu'au fil des évolutions du drone, de ses accélérations, ralentissements, etc. l'axe δ oscille en permanence autour de la direction de l'horizon HZ, ce qui se traduira sur l'image par des mouvements d'oscillation permanents vers le haut et vers le bas.

De façon comparable, si le drone se décale vers la droite ou vers la gauche, ce mouvement s'accompagnera d'un pivotement autour de l'axe de roulis 24, qui se traduira sur l'image par des rotations dans un sens ou dans l'autre de la scène captée par la caméra.

Pour pallier ces inconvénients il a été proposé, comme cela est exposé dans le EP 2 933 775 A1 précité (publié le 21.10.2015), de munir la caméra d'un objectif à champ hémisphérique de type *fisheye* couvrant un champ d'environ 180°, schématisé en 42 sur la Figure 2a. L'image captée par la caméra munie de cet objectif *fisheye* subira certes les mêmes mouvements d'oscillation et de rotation qu'une caméra conventionnelle mais on n'utilisera qu'une partie du champ capté par cette caméra en sélectionnant une fenêtre particulière correspondant au secteur angulaire 36 capté par une caméra conventionnelle, et qui sera dynamiquement déplacée dans l'image hémisphérique en sens inverse des mouvements du drone tels que déterminés par la centrale inertielle, afin d'annihiler les oscillations qui sinon seraient observées sur l'image.

Ainsi, dans le cas illustré Figure 2b où le drone plonge vers le bas d'un angle de tangage *ϕ* (flèche 38) par rapport à la verticale V, la fenêtre de capture sera déplacée vers le haut (flèche 44) d'un angle de même valeur, ramenant ainsi dans la direction de l'horizon HZ l'axe central du secteur 36 d'une "caméra virtuelle" couvrant le champ correspondant à la zone image.

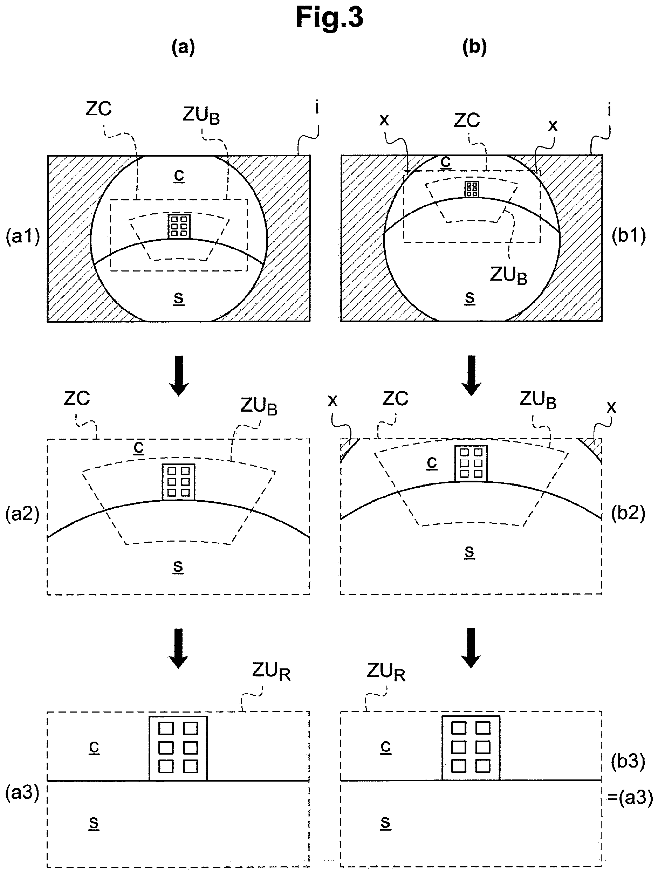

On va maintenant exposer le problème de l'invention, en référence à la Figure 3.

La Figure 3 montre en (a1) un exemple de scène, telle que recueillie par le capteur de la caméra video munie de l'objectif *fisheye.*

Comme on peut le constater, l'image I de cette scène comporte de très fortes distorsions géométriques, inhérentes à la couverture hémisphérique ou quasi-hémisphérique de l'objectif *fisheye,* redressée sur la surface plane du capteur.

Seule une partie de cette image I produite par l'objectif *fisheye* va être utilisée. Cette partie est déterminée en fonction i) de la direction dans laquelle est pointée la "caméra virtuelle", ii) du champ de vision de celle-ci (schématisé en 36 sur les Figures 2a et 2b) et iii) de son ratio largeur/ hauteur. On définit ainsi une "zone de capture" ZC contenant des données de pixel brutes incluant la "zone utile" brute ZU_{B} qui correspondra au champ de la "caméra virtuelle" après compensation des distorsions géométriques introduites par l'objectif *fisheye.*

On notera qu'il n'est pas utile de capturer la totalité des pixels de l'image I formée sur le capteur, mais seulement une fraction de ceux-ci, correspondant à la zone de capture ZC, par exemple une fenêtre ZC d'environ 2 Mpixel extraite d'une image I en qualité HD (1920 x 1080 pixels) produite par un capteur dont la résolution sera typiquement de 14 Mpixel (4608 x 3288 pixels). On ne transfère donc que les données de pixel de la zone de capture ZC réellement nécessaires, données qui peuvent alors être rafraichies à une cadence de 30 images/seconde sans difficulté particulière. On peut ainsi choisir un capteur de haute résolution tout en conservant un débit d'images élevé.

Les vues (a2) et (a3) de la Figure 3 illustrent les traitements opérés sur les données de pixel de la zone de capture ZC pour parvenir à l'image finale compensée des distorsions géométriques : à partir des données de pixel transférées de la zone de capture ZC (vue (a2)) un algorithme extrait les données de pixel de la zone utile brute ZU_{B} et leur applique un maillage de triangles (technique en elle-même connue) puis redresse l'image par étirement de chaque triangle, pour donner une image utile redressée ZU_{R} (vue (a3)) avec des données de pixel rectifiées. Les lignes horizontales fortement courbées de l'image *fisheye* seront ainsi corrigées pour les rendre rectilignes et produire une image correspondant à une vision naturelle, dépourvue de distorsions géométriques.

Les vues (b1)-(b3) de la Figure 3 sont homologues des vues (a1)-(a3), dans une configuration où l'attitude du drone se modifie du fait d'une inclinaison de celui-ci vers l'avant (rotation autour de son axe de tangage), inclinaison consécutive par exemple à une transition d'une configuration immobile, en vol stationnaire, vers une configuration de progression vers l'avant (la vitesse linéaire du drone étant d'autant plus grande que son inclinaison est forte).

Comme illustré en (b1), pour compenser cette inclinaison du drone vers le bas, la zone de capture ZC est déplacée vers le haut de l'image, donc dans un sens contraire à celui de l'inclinaison du drone. Si la position relative de la zone utile brute ZU_{B} reste sensiblement la même à l'intérieur de la zone de capture ZC (pour permettre la poursuite de la scène visée), la zone de capture va en revanche inclure dorénavant une part beaucoup plus importante de sol S que de ciel C : si l'on compare ainsi les vues (a2) et (b2), on constate que dans la configuration initiale (vue(a2)) la proportion ciel/sol est d'environ 50/50 %, tandis que dans la configuration modifiée ((vue(b2)) la proportion ciel/sol est d'environ 25/75 %. De plus, si elle est fortement déplacée vers le haut la zone de capture peut inclure des zones X qui sont situées en dehors de la région de l'image circulaire formée par l'objectif *fisheye* sur le capteur.

En revanche, l'image finale ZU_{R} de la zone utile redressée (vue (b3)) sera sensiblement identique à ce qu'elle était (vue (a3)) avant le basculement du drone vers l'avant.

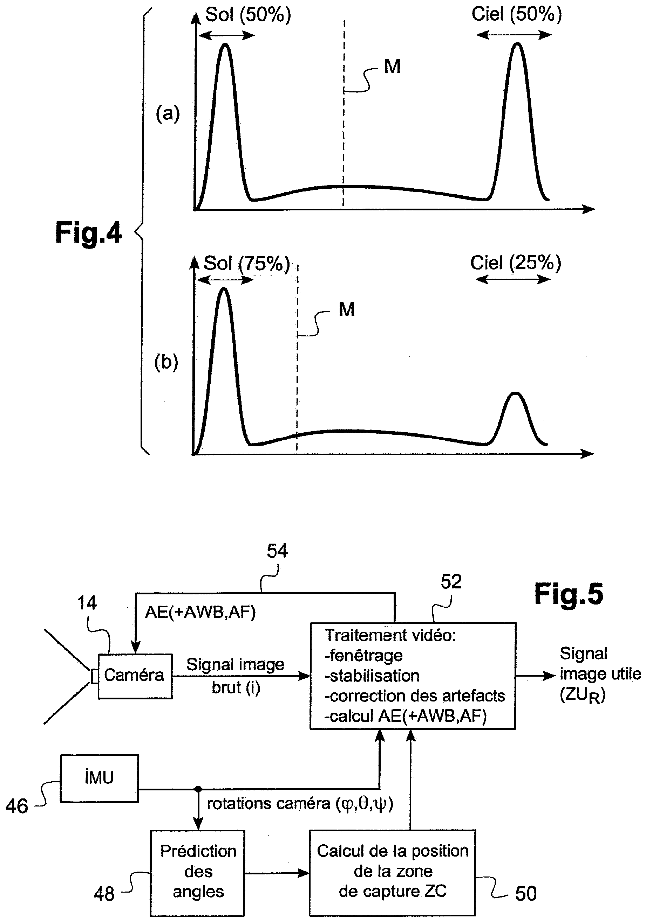

La Figure 4 illustre les histogrammes obtenus par analyse de la luminosité des pixels de l'imagette issue de la zone de capture ZC, respectivement en (a) dans le cas de la vue (a2) et en (b) dans le cas de la vue (b2).

Comme on peut le voir sur cette figure, le basculement du drone vers l'avant se traduit par une modification significative de l'histogramme de luminosité, avec un décalage vers la gauche de la valeur moyenne M du fait de l'augmentation du ratio sol/ciel dans l'image de la zone ZC. L'algorithme d'autoexposition interprètera ce changement de la valeur moyenne M comme un assombrissement de l'image, qui sera automatiquement compensé par une augmentation du temps d'exposition et/ou de la sensibilité de la caméra.

De ce fait, les images finales (a3) et (b3) respectivement obtenues (images de la zone utile redressée ZU_{R}), si elles présentent à l'utilisateur le même cadrage de la scène, diffèreront par leur réglage d'exposition, l'image de la vue (b3) étant plus claire que celle de la vue (a3).

La présente invention a pour objet de corriger ce défaut.

La Figure 5 illustre sous forme de schéma par blocs fonctionnels les différents modules participant à la mise en oeuvre de l'invention.

La caméra frontale 14 du drone délivre un signal d'image brut correspondant à l'image I. Cette caméra, mécaniquement liée au corps du drone, est sujette à des déplacements angulaires qui sont mesurés par une centrale inertielle (IMU) 12 liée au corps de drone et donc à la caméra. Les rotations de la caméra sont données par l'angle de tangage ϕ, l'angle de roulis θ et l'angle de lacet ψ décrivant l'inclinaison du drone dans les trois dimensions par rapport à un repère terrestre fixe (angles d'Euler). Ces données sont appliquées à un module 48 de prédiction des angles pilotant un module de calcul de la position de la zone de capture ZC dans l'image I. Un module 52 de traitement vidéo reçoit en entrée le signal d'image brut I et assure diverses opérations de fenêtrage en fonction de la position de la zone de capture ZC calculée par le module 50, de stabilisation de l'image, d'extraction et de redressement de la zone utile, pour délivrer en sortie à l'utilisateur un signal d'image utile ZU_{R} pour transmission à l'utilisateur, affichage et enregistrement éventuels.

Le module 52 assure également le contrôle (schématisé par le retour 54) des paramètres de fonctionnement de la caméra, à savoir le contrôle de l'autoexposition AE, de la balance des blancs AWB et de la mise au point automatique AF. Le module 52 assure également la correction, selon l'invention, du défaut décrit plus haut portant sur le calcul automatique de ces paramètres de fonctionnement de la caméra, de la manière que l'on va décrire plus bas.

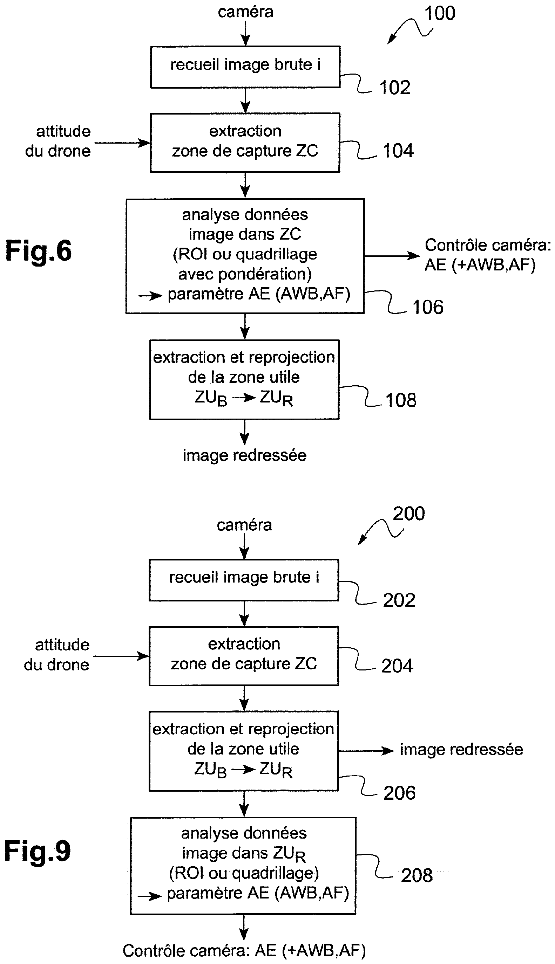

La Figure 6 est un organigramme explicitant les principales étapes successives de mise en oeuvre de l'invention, dans un premier et un deuxième mode de réalisation de celle-ci.

Cet organigramme 100 comprend une étape initiale (bloc 102) de recueil de l'image brute I par la caméra, suivie d'une étape (bloc 104) d'extraction dans cette image brute de la zone de capture ZC en fonction des données d'attitude du drone délivrées par la centrale inertielle IMU.

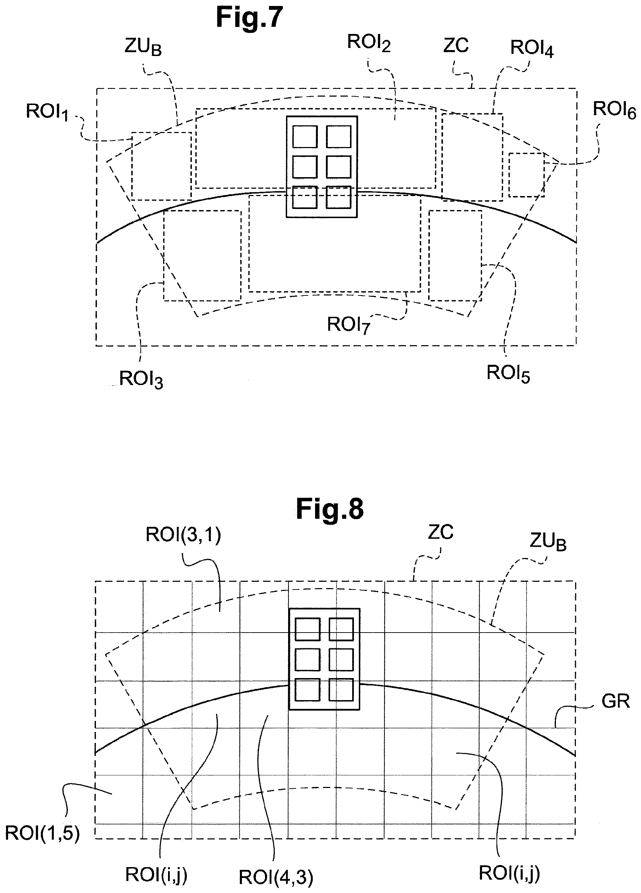

L'étape suivante (bloc 106), caractéristique de l'invention, consiste en une analyse des données d'image de la zone de capture, de la manière que l'on expliquera en détail plus bas en référence aux Figures 7 et 8, pour la délivrance de paramètres de contrôle de la caméra, notamment du paramètre d'autoexposition.

Le contenu de la zone de capture ZC fait ensuite l'objet d'un traitement (bloc 108) d'extraction de la zone utile brute ZU_{B} et de reprojection de cette zone utile brute ZU_{B} pour donner la zone utile redressée ZU_{R}, correspondant à l'image redressée finale délivrée à l'utilisateur.

En référence aux Figures 7 et 8, on va maintenant décrire plus en détail deux modes de réalisation possibles de l'analyse des données opérée par le bloc 106.

On notera incidemment que cette analyse est effectuée sur la base de l'imagette issue de l'image contenue initialement dans la zone de capture ZC (en aval du bloc 104), avant l'étape de reprojection (bloc 108), donc sur une version déformée de l'image.

La Figure 7 illustre les zones d'analyse de la zone de capture selon *le premier mode de réalisation* de l'invention, analyse opérée à partir de régions d'intérêt ROI définies automatiquement à l'intérieur de l'imagette issue de la zone de capture.

Dans ce mode de réalisation, le dispositif d'analyse de l'image définit (selon des techniques en elles-mêmes connues, qui ne seront pas décrites plus en détail) une pluralité de régions d'intérêt ROI, qui sont des sélections géométriques de zones de dimension réduite dans l'image à analyser, un histogramme de luminosité étant établi pour chacune de ces zones. L'algorithme d'autoexposition analyse et compare les histogrammes correspondant aux différentes ROI et ajuste le niveau d'exposition en conséquence, selon des techniques d'analyse également connues en elles-mêmes.

De façon caractéristique de l'invention, les ROI sont réparties dans l'imagette issue de la zone de capture de manière à se situer totalement ou partiellement à l'intérieur de la zone utile brute ZU_{B}, c'est-à-dire que si l'algorithme de définition des ROI génère des ROI à l'extérieur de la zone utile brute ZU_{B}, ces dernières seront exclues de l'analyse ultérieure pour le contrôle de l'autoexposition. Dans tous les cas, les données de pixel situées en dehors de la région de l'image formée sur le capteur par l'objectif (régions X des vues (b1) et (b2) de la Figure 3) sont exclues de l'analyse. En d'autres termes, les pixels situés hors du cercle image sont ignorés pour le calcul de l'autoexposition.

Par ailleurs, chacune des régions d'intérêt ROI₁ ... ROIₙ est affectée d'une valeur de pondération tenant compte de l'étendue plus ou moins grande du recouvrement de la ROI concernée avec la zone utile utilisateur brute ZU_{B} définie à l'intérieur de la zone de capture : la pondération sera maximale pour les ROI entièrement incluses dans la zone ZU_{B}, nulle pour les ROI situées entièrement à l'extérieur de la zone ZU_{B} (ce qui revient à les exclure de l'analyse), et intermédiaire pour les ROI partiellement incluses dans la zone ZU_{B} (la pondération étant d'autant plus élevée que la proportion de l'aire de la ROI située à l'intérieur de la zone ZU_{B} est élevée).

La Figure 8 illustre *un deuxième mode de réalisation,* dans lequel les ROI ne sont plus définies de façon dynamique et avec une taille variable, mais sous forme d'un quadrillage régulier de l'imagette issue de la zone de capture ZC, avec une grille GR dont chaque carré ou rectangle élémentaire ROI(i,j) sera affecté d'une pondération variable en fonction de son caractère plus ou moins chevauchant avec la zone ZU_{B}, de la même manière que dans le premier mode de réalisation, exposé en relation avec la Figure 7.

La Figure 9 est un organigramme explicitant les principales étapes successives de mise en oeuvre de l'invention, dans *un troisième mode de réalisation* de celle-ci.

Dans ce troisième mode de réalisation, l'analyse des données d'image n'est pas effectuée sur l'imagette issue de la version initiale, déformée, de l'image (zone de capture ZC et zone utile brute ZU_{B}) avec une pondération appliquée à chaque région d'intérêt, mais sur l'imagette issue de l'image redressée, après l'étape de reprojection.

Sur l'organigramme 200, les blocs 202 (recueil de l'image), 204 (extraction de la zone de capture ZC) et 206 (extraction et reprojection de la zone utilisateur) sont homologues des blocs respectifs 102, 104 et 108 de la Figure 6.

En revanche, l'étape d'analyse des données pour le contrôle des paramètres d'autoexposition de la caméra (bloc 208) est opérée en aval du bloc 206, c'est-à-dire sur la version redressée de l'image. L'autoexposition travaille alors de manière conventionnelle (définition automatique des ROI, etc.) sans qu'il soit nécessaire d'appliquer à chaque ROI une valeur de pondération reflétant la position de cette ROI par rapport à la zone utile brute ZU_{B}.

## Revendications

1. Un drone (10) comprenant :
- une caméra (14) liée au corps du drone, comprenant :
• un objectif à champ hémisphérique de type *fisheye* pointant dans une direction fixe par rapport au corps du drone ; et
• un capteur numérique recueillant l'image (I) formée par l'objectif et délivrant des données d'image brutes ;
- une centrale inertielle (46), apte à mesurer les angles d'Euler (*ϕ*, *θ, ψ*) caractérisant l'attitude instantanée du drone par rapport à un repère terrestre absolu et délivrant en sortie des données d'attitude courante du drone ;
- des moyens extracteurs (52), aptes à définir dans ladite image (I) formée sur l'étendue du capteur la position d'une zone de capture (ZC) de dimension réduite ;
- des moyens d'asservissement (48, 50, 52), recevant en entrée les données d'attitude courante du drone et aptes à modifier dynamiquement la position et l'orientation de la zone de capture (ZC) dans ladite image (I) dans un sens contraire de celui des changements des valeurs des angles mesurés par la centrale inertielle ; et
- des moyens de reprojection (52), recevant en entrée des données d'image d'une zone utilisateur (ZU_{B}) extraite de la zone de capture (ZC) et délivrant en sortie des données d'image redressée correspondantes (ZU_{R}), compensées des distorsions géométriques introduites par l'objectif *fisheye,*
**caractérisé en ce que** la caméra (14) comprend en outre :
• des moyens de contrôle dynamique d'au moins un paramètre de prise de vue parmi : auto-exposition, balance des blancs et autofocus ;
et **en ce que** le drone comprend en outre :
- des moyens d'analyse (50, 52), aptes à définir dans la zone de capture (ZC) au moins une imagette de définition réduite, et à délivrer (54) à la caméra (14) une valeur courante dudit paramètre de prise de vue en fonction des données d'image contenues dans ladite imagette ; et
- des moyens compensateurs (52), ces moyens recevant en entrée les données d'attitude courante du drone délivrées par la centrale inertielle et étant aptes à interagir dynamiquement avec les moyens d'analyse, en fonction de ces données d'attitude courante, dans un sens contraire aux variations, susceptibles d'être provoquées par les variations instantanées d'attitude du drone, pour ajuster ladite valeur du paramètre de prise de vue délivrée par les moyens d'analyse,
de manière à conserver audit paramètre de prise de vue une valeur sensiblement indépendante des variations instantanées d'attitude du drone.

2. Le drone de la revendication 1, dans lequel les moyens (52) de stabilisation du paramètre de prise de vue à l'encontre des variations instantanées d'attitude du drone comprennent des moyens pour :
• exclure desdites données d'image contenues dans l'imagette définie dans la zone de capture (ZC) les données d'image brutes qui sont situées en dehors (X) de la région de l'image formée par l'objectif sur le capteur.

3. Le drone de la revendication 1, dans lequel les moyens (52) de stabilisation du paramètre de prise de vue à l'encontre des variations instantanées d'attitude du drone reçoivent en entrée (104) les données d'image comprises dans l'imagette définie dans la zone de capture (ZC), délivrées par les moyens extracteurs.

4. Le drone de la revendication 3, dans lequel les moyens (52) de stabilisation du paramètre de prise de vue à l'encontre des variations instantanées d'attitude du drone comprennent des moyens pour :
• définir dynamiquement dans chaque image une pluralité de régions d'intérêt ROI (ROI₁ ... ROI₇) réparties dans la zone de capture (ZC) avec une imagette correspondante pour chaque ROI, et à délivrer une valeur courante dudit paramètre de prise de vue pour chaque imagette respective ; et
• interagir dynamiquement avec les moyens d'analyse par modification de la dimension et/ou du positionnement des ROI dans la zone de capture en fonction des données d'attitude courante du drone.

5. Le drone de la revendication 4, dans lequel les moyens (52) de stabilisation du paramètre de prise de vue à l'encontre des variations instantanées d'attitude du drone comprennent des moyens pour :
• exclure préalablement de la définition des ROI celles des ROI qui sont situées à l'extérieur de la zone utilisateur (ZU_{B}) courante incluse dans la zone de capture (ZC).

6. Le drone de la revendication 5, dans lequel les moyens (52) de stabilisation du paramètre de prise de vue à l'encontre des variations instantanées d'attitude du drone comprennent des moyens pour :
• attribuer (106) à chaque ROI une valeur de pondération propre fonction de l'étendue plus ou moins grande du recouvrement de la ROI avec la zone utilisateur courante (ZU_{B}) définie à l'intérieur de la zone de capture, cette valeur étant maximale pour les ROI entièrement incluses dans la zone utilisateur courante et moindre pour les ROI chevauchantes s'étendant à la fois à l'intérieur et à l'extérieur de la zone utilisateur courante.

7. Le drone de la revendication 5, dans lequel les moyens (52) de stabilisation du paramètre de prise de vue à l'encontre des variations instantanées d'attitude du drone comprennent des moyens pour :
• attribuer à chaque ROI une valeur de pondération propre fonction de la surface plus ou moins grande de la ROI.

8. Le drone de la revendication 3, dans lequel les moyens (52) de stabilisation du paramètre de prise de vue à l'encontre des variations instantanées d'attitude du drone comprennent des moyens pour :
• définir dans chaque image une grille (GR) de régions d'intérêt ROI (ROI(i,j)) réparties uniformément et de façon prédéterminée dans la zone de capture (ZC) avec une imagette correspondante pour chaque ROI, et délivrer une valeur courante dudit paramètre de prise de vue pour chaque imagette respective ; et
• attribuer (106) à chaque ROI une valeur de pondération propre fonction de l'étendue du recouvrement de la ROI avec la zone utilisateur courante (ZUB) définie à l'intérieur de la zone de capture (ZC), cette valeur étant maximale pour les ROI incluses dans la zone utilisateur courante, minimale pour les ROI extérieures à la zone utilisateur courante, et intermédiaire pour les ROI chevauchantes s'étendant à la fois à l'intérieur et à l'extérieur de la zone utilisateur courante.

9. Le drone de la revendication 1, dans lequel les moyens (52) de stabilisation du paramètre de prise de vue à l'encontre des variations instantanées d'attitude du drone reçoivent en entrée (206) les données d'image redressée (ZU_{R}), compensées des distorsions géométriques introduites par l'objectif *fisheye,* délivrées par les moyens de reprojection.

10. Le drone de la revendication 9, dans lequel les moyens (52) de stabilisation du paramètre de prise de vue à l'encontre des variations instantanées d'attitude du drone comprennent des moyens pour :
• définir dynamiquement dans chaque image une pluralité de régions d'intérêt ROI réparties dans l'image redressée (ZUR) avec une imagette correspondante pour chaque ROI, et délivrer une valeur courante dudit paramètre de prise de vue pour chaque imagette respective ; et
• modifier la dimension et/ou le positionnement des ROI dans l'image redressée (ZUR) en fonction des données d'attitude courante du drone.

## Patentansprüche

1. Drohne (10), umfassend:
- eine Kamera (14), die mit dem Körper der Drohne verbunden ist, umfassend:
• ein Objektiv mit halbkreisförmigem Feld des Fisheye-Typs, das in einer relativ zu dem Körper der Drohne feststehenden Richtung ausgerichtet ist; und
• einen digitalen Sensor, der das von dem Objektiv gebildete Bild (I) auffängt und Rohbilddatenelemente bereitstellt;
- eine inertiale Zentrale (46), die in der Lage ist, die Euler-Winkel (ϕ, θ, ψ) zu messen, welche die momentane Fluglage der Drohne gegenüber einem absoluten terrestrischen Bezugssystem kennzeichnen, und am Ausgang Datenelemente der aktuellen Fluglage der Drohne bereitstellt;
- Extraktionsmittel (52), die in der Lage sind, in dem über die Ausdehnung des Sensors gebildeten Bild (I) die Position einer Erfassungszone (ZC) mit reduzierten Maßen zu definieren;
- Nachführungsmittel (48, 50, 52), die am Eingang die Datenelemente der aktuellen Fluglage der Drohne empfangen und in der Lage sind, die Position und die Ausrichtung der Erfassungszone (ZC) in dem Bild (I) in einer Richtung dynamisch zu verändern, die zu der der Änderungen der Werte der von der inertialen Zentrale gemessenen Winkel entgegengesetzt ist; und
- Reprojektionsmittel (52), die am Eingang Bilddatenelemente einer Benutzerzone (ZU_{B}), die aus der Erfassungszone (ZC) extrahiert ist, empfangen und am Ausgang entsprechende Datenelemente des aufgerichteten Bildes (ZU_{R}) bereitstellen, die hinsichtlich der geometrischen Verzerrungen, die durch das Fisheye-Objektiv eingespeist wurden, kompensiert sind; und
**dadurch gekennzeichnet, dass** die Kamera (14) ferner Folgendes umfasst:
• Mittel zur dynamischen Steuerung mindestens eines Bildaufnahmeparameters aus: Belichtungsautomatik, Weißabgleich und Autofokus;
und dadurch dass die Drohne ferner Folgendes umfasst:
- Analysemittel (50, 52), die in der Lage sind, in der Erfassungszone (ZC) mindestens ein Kleinbild mit reduzierter Bildauflösung zu definieren und der Kamera (14) einen aktuellen Wert des Bildaufnahmeparameters in Abhängigkeit von den in dem Kleinbild enthaltenen Bilddatenelementen bereitzustellen (54); und
- Kompensationsmittel (52), wobei diese Mittel am Eingang die Datenelemente der aktuellen Fluglage der Drohne empfangen, die von der inertialen Zentrale bereitgestellt werden, und in der Lage sind, mit den Analysemitteln in Abhängigkeit von diesen Datenelementen der aktuellen Fluglage in einer Richtung dynamisch zu interagieren, die zu den Veränderungen, die durch die kurzzeitigen Veränderungen der Fluglage der Drohne verursacht werden können, entgegengesetzt ist, um den Wert des von den Analysemitteln bereitgestellten Bildaufnahmeparameters derart anzupassen, dass für den Bildaufnahmeparameter ein Wert bewahrt wird, der von den kurzzeitigen Veränderungen der Fluglage der Drohne im Wesentlichen unabhängig ist.

2. Drohne nach Anspruch 1, wobei die Mittel (52) zur Stabilisierung des Bildaufnahmeparameters gegen die kurzzeitigen Veränderungen der Fluglage der Drohne Mittel umfassen, um:
• aus den Bilddatenelementen, die in dem Kleinbild enthalten sind, das in der Erfassungszone (ZC) definiert ist, die Rohbilddatenelemente auszuschließen, die außerhalb (X) des Bereichs des durch das Objektiv auf dem Sensor gebildeten Bildes liegen.

3. Drohne nach Anspruch 1, wobei die Mittel (52) zur Stabilisierung des Bildaufnahmeparameters gegen die kurzzeitigen Veränderungen der Fluglage der Drohne am Eingang (104) die Bilddatenelemente empfangen, die in dem Kleinbild enthalten sind, das in der Erfassungszone (ZC) definiert ist, und die von den Extraktionsmitteln bereitgestellt werden.

4. Drohne nach Anspruch 3, wobei die Mittel (52) zur Stabilisierung des Bildaufnahmeparameters gegen die kurzzeitigen Veränderungen der Fluglage der Drohne Mittel umfassen, um:
• in jedem Bild eine Mehrzahl von Bereichen von Interesse ROI (ROI₁... ROI₇) dynamisch zu definieren, die in der Erfassungszone (ZC) mit einem entsprechenden Kleinbild für jeden ROI verteilt sind, und einen aktuellen Wert des Bildaufnahmeparameters für jedes jeweilige Kleinbild bereitzustellen; und
• mit den Bildanalysemitteln durch Veränderung der Ausdehnung und/oder der Positionierung der ROI in der Erfassungszone in Abhängigkeit von den Datenelementen der aktuellen Fluglage der Drohne dynamisch zu interagieren.

5. Drohne nach Anspruch 4, wobei die Mittel (52) zur Stabilisierung des Bildaufnahmeparameters gegen die kurzzeitigen Veränderungen der Fluglage der Drohne Mittel umfassen, um:
- vorab aus der Bildauflösung der ROI diejenigen ROI auszuschließen, die außerhalb der aktuellen Benutzerzone (ZU_{B}), die in der Erfassungszone (ZC) enthalten ist, liegen.

6. Drohne nach Anspruch 5, wobei die Mittel (52) zur Stabilisierung des Bildaufnahmeparameters gegen die kurzzeitigen Veränderungen der Fluglage der Drohne Mittel umfassen, um:
• jedem ROI einen eigenen Gewichtungswert in Abhängigkeit von dem mehr oder weniger großen Überschneidungsbereich des ROI mit der aktuellen Benutzerzone (ZU_{B}), die innerhalb der Erfassungszone definiert ist, zuzuweisen (106), wobei dieser Wert bei den ROI, die vollständig in der aktuellen Benutzerzone enthalten sind, maximal ist und bei den überlappenden ROI, die sich gleichzeitig innerhalb und außerhalb der aktuellen Benutzerzone erstrecken, geringer ist.

7. Drohne nach Anspruch 5, wobei die Mittel (52) zur Stabilisierung des Bildaufnahmeparameters gegen die kurzzeitigen Veränderungen der Fluglage der Drohne Mittel umfassen, um:
• jedem ROI einen eigenen Gewichtungswert in Abhängigkeit von der mehr oder weniger großen Oberfläche des ROI zuzuweisen.

8. Drohne nach Anspruch 3, wobei die Mittel (52) zur Stabilisierung des Bildaufnahmeparameters gegen die kurzzeitigen Veränderungen der Fluglage der Drohne Mittel umfassen, um:
• in jedem Bild ein Raster (GR) von Bereichen von Interesse ROI (ROI(i,j)) zu definieren, die gleichmäßig und auf vorbestimmte Weise in der Erfassungszone (ZC) mit einem entsprechenden Kleinbild für jeden ROI verteilt sind, und einen aktuellen Wert des Bildaufnahmeparameters für jedes jeweilige Kleinbild bereitzustellen; und
• jedem ROI einen eigenen Gewichtungswert in Abhängigkeit von dem Überschneidungsbereich des ROI mit der aktuellen Benutzerzone (ZU_{B}), die innerhalb der Erfassungszone (ZC) definiert ist, zuzuweisen (106), wobei dieser Wert bei den ROI, die in der aktuellen Benutzerzone enthalten sind, maximal ist, bei den ROI außerhalb der aktuellen Benutzerzone minimal ist und bei den überlappenden ROI, die sich gleichzeitig innerhalb und außerhalb der aktuellen Benutzerzone erstrecken, dazwischen liegt.

9. Drohne nach Anspruch 1, wobei die Mittel (52) zur Stabilisierung des Bildaufnahmeparameters gegen die kurzzeitigen Veränderungen der Fluglage der Drohne am Eingang (206) die Datenelemente des aufgerichteten Bildes (ZU_{R}) empfangen, die hinsichtlich der geometrischen Verzerrungen, die durch das Fisheye-Objektiv eingespeist wurden, kompensiert sind, und von den Reprojektionsmitteln bereitgestellt werden.

10. Drohne nach Anspruch 9, wobei die Mittel (52) zur Stabilisierung des Bildaufnahmeparameters gegen die kurzzeitigen Veränderungen der Fluglage der Drohne Mittel umfassen, um:
• in jedem Bild eine Mehrzahl von Bereichen von Interesse ROI dynamisch zu definieren, die in dem aufgerichteten Bild (ZU_{R}) mit einem entsprechenden Kleinbild für jeden ROI verteilt sind, und einen aktuellen Wert des Bildaufnahmeparameters für jedes jeweilige Kleinbild bereitzustellen; und
• die Ausdehnung und/oder die Positionierung der ROI in dem aufgerichteten Bild (ZU_{R}) in Abhängigkeit von den Datenelementen der aktuellen Fluglage der Drohne zu verändern.

## Claims

1. A drone (10) comprising:
- a camera (14) linked to the drone body, comprising:
• a hemispheric-field lens of the fisheye type, aimed to a fixed direction with respect to the drone body; and
• a digital sensor collecting the image (I) formed by the lens and providing raw image data;
- an inertial unit (46), adapted to measure Euler angles (ϕ, *θ*, ψ) characterizing the instantaneous attitude of the drone with respect to an absolute terrestrial reference system and outputting current drone attitude data;
- extractor means (52), adapted to define, in said image (I) formed over the extent of the sensor, the position of a capture area (ZC) of reduced size;
- servocontrol means (48, 50, 52), receiving as an input the current drone attitude data and adapted to dynamically modify the position and the orientation of the capture area (ZC) in said image (I) in a direction opposite to that of the changes of value of the angles measured by the inertial unit; and
- reprojection means (52), receiving as an input image data of a user area (ZU_{B}) extracted from the capture area (ZC) and outputting corresponding straightened image data (ZU_{R}), compensated for the geometric distortions introduced by the fisheye lens,
**characterized in that** the camera (14) further comprises:
• means for dynamically controlling at least one imaging parameter among: auto-exposure, white balance and autofocus;
and **in that** the drone further comprises:
- analysis means (50, 52), adapted to define in the capture area (ZC) at least one reduced-definition thumbnail, and to provide (54) the camera (14) with a current value of said imaging parameter as a function of the image data contained in said thumbnail; and
- compensator means (52), such means receiving as an input the current drone attitude data provided by the inertial unit and being adapted to dynamically interact with the analysis means, as a function of these current attitude data, in a direction opposite to the variations liable to be caused by the instantaneous drone attitude variations, to adjust said value of the imaging parameter, provided by the analysis means,
whereby keeping said imaging parameter to a value that is substantially independent of the instantaneous drone attitude variations.

2. The drone of claim 1, wherein the means (52) for stabilizing the imaging parameter against the instantaneous drone attitude variations comprise means for:
• excluding from said image data contained in the thumbnail defined in the capture area (ZC) the raw image data that are located outside (X) the area of the image formed by the lens on the sensor.

3. The drone of claim 1, wherein the means (52) for stabilizing the imaging parameter against the instantaneous drone attitude variations receive as an input (104) the image data comprised in the thumbnail defined in the capture area (ZC), provided by the extractor means.

4. The drone of claim 3, wherein the means (52) for stabilizing the imaging parameter against the instantaneous drone attitude variations comprise means for:
• dynamically defining in each image a plurality of regions of interest ROIs (ROI₁ ... ROI₇) distributed over the capture area (ZC), with a corresponding thumbnail for each ROI, and providing a current value of said imaging parameter for each respective thumbnail; and
• dynamically interacting with the analysis means by modification of the size and/or position of the ROIs in the capture area as a function of the current drone attitude data.

5. The drone of claim 4, wherein the means (52) for stabilizing the imaging parameter against the instantaneous drone attitude variations comprise means for:
• previously excluding from the ROI definition those of the ROIs that are located outside the current user area (ZU_{B}) included in the capture area (ZC).

6. The drone of claim 5, wherein the means (52) for stabilizing the imaging parameter against the instantaneous drone attitude variations comprise means for:
• allocating (106) each ROI with a peculiar weighting value that is function of the greater or lesser extent of the overlapping of the ROI with the current user area (ZU_{B}) defined inside the capture area, this value being maximum for the ROIs entirely included in the current user area and lower for the overlapping ROIs extending both inside and outside the current user area.

7. The drone of claim 5, wherein the means (52) for stabilizing the imaging parameter against the instantaneous drone attitude variations comprise means for:
• allocating each ROI with a peculiar weighting value that is function of the greater or lesser surface area of the ROI.

8. The drone of claim 3, wherein the means (52) for stabilizing the imaging parameter against the instantaneous drone attitude variations comprise means for:
• defining in each image a grid (GR) of regions of interest ROIs (ROI(i,j)) distributed in a uniform and predetermined manner over the capture area (ZC), with a corresponding thumbnail for each ROI, and providing a current value of said imaging parameter for each respective thumbnail; and
• allocating (106) each ROI with a peculiar weighting value that is function of the extent of the overlapping of the ROI with the current user area (ZU_{B}) defined inside the capture area (ZC), this value being maximum for the ROIs included in the current user area, minimum for the ROIs located outside the current user area, and intermediate for the overlapping ROIs extending both inside and outside the current user area.

9. The drone of claim 1, wherein the means (52) for stabilizing the imaging parameter against the instantaneous drone attitude variations receive as an input (206) the straightened image data (ZU_{R}), compensated for the geometric distortions introduced by the fisheye lens, provided by the reprojection means.

10. The drone of claim 9, wherein the means (52) for stabilizing the imaging parameter against the instantaneous drone attitude variations comprise means for:
• dynamically defining in each image a plurality of regions of interest ROIs distributed over the straightened image (ZU_{R}), with a corresponding thumbnail for each ROI, and providing a current value of said imaging parameter for each respective thumbnail; and
• modifying the size and/or position of the ROIs in the straightened image (ZU_{R}) as a function of the current drone attitude data.
